# EUROPEAN PATENT SPECIFICATION

(11) **EP 2 636 925 B1**
(45) Date of publication and mention of the grant of the patent: **23.09.2015**
(21) Application number: 13151189.1
(22) Date of filing: 14.01.2013
(51) Int. Cl.: F16H 55/18, H01R 35/02, B60R 16/027

(54) **Rotation transmission mechanism and rotary connector**
Rotationsübertragungsmechanismus und Drehstecker
Mécanisme de transmission de rotation et connecteur rotatif

(30) Priority: 09.03.2012 JP 2012052920
(43) Date of publication of application: 11.09.2013
(73) Proprietor: Alps Electric Co., Ltd., Tokyo 145-8501 (JP)
(72) Inventor: Sano, Tadashi, Tokyo, Tokyo 145-8501 (JP); Ito, Kazuhiko, Tokyo, Tokyo 145-8501 (JP)
(74) Representative: Klunker . Schmitt-Nilson . Hirsch

(56) References cited:
- DE-A1-102008 009 122
- DE-B- 1 300 408
- US-A- 5 171 153

## Description

### BACKGROUND OF THE INVENTION

### 1. Field of the Invention

The present invention relates to a rotation transmission mechanism according to the preamble of claim 1. Such mechanism can transmit rotation by the engagement of a plurality of gears. It also relates to a rotary connector including the rotation transmission mechanism, and more particularly, to a rotation transmission mechanism of which at least one of a plurality of gears can be deformed in a radial direction and a rotary connector including the rotation transmission mechanism.

### 2. Description of the Related Art

A rotary connector is used in an automobile or the like to transmit an electrical signal or an optical signal or to supply electric power between a stationary body and a rotating body. Specifically, when a steering wheel is provided with an air bag or switches used to operate an audio system or the like, electrical communication and the like need to be made between the steering wheel as a rotating body and a vehicle as a stationary body. Accordingly, a rotary connector is installed between the steering wheel and the vehicle.

In a rotary connector, a stationary housing provided on a stationary body and a movable housing provided on a rotating body are disposed coaxially, an annular space is formed between an outer cylindrical body formed on the stationary housing and an inner cylindrical body formed on the movable housing, and a flat cable is wound and received in the annular space. Both end portions of the flat cable are connected to the stationary housing and the movable housing. Accordingly, when the movable housing is rotated with the rotation of the rotating body, the flat cable is wound or loosened. Therefore, electrical connection with the stationary body is maintained regardless of the rotation of the rotating body.

In such a rotary connector, it is possible to reduce the length of the flat cable that is required for obtaining the same rotatable range of the rotary connector by inverting the middle portion of the flat cable. As such a rotary connector, there is a rotary connector disclosed in, for example, Japanese Unexamined Utility Model Registration Application Publication No. 6-50283.

The rotary connector where the length of the flat cable is reduced by the inversion of the flat cable employs a structure where the stationary housing is provided with an internal gear (outer gear), the movable housing is provided with a sun gear, the internal gear and the sun gear face each other, a planetary gear engaged with both the internal gear and the sun gear is provided, and the planetary gear is provided with an inversion maintaining portion maintaining the inversion of the flat cable.

However, in this case, for smooth operation, a certain level of backlash is needed between the planetary gear and the internal gear and the sun gear in consideration of the deformation of the gears, and the like. For this reason, when an automobile vibrates, the gears collide with each other, which causes rattling to be generated. This is not limited to the rotary connector, and is a general problem in a rotation transmission mechanism that transmits rotation by the engagement of a plurality of gears.

In accordance with the preamble of claim 1, DE 10 2008 009 122 A1 discloses a rotation transmission mechanism in which the connecting portions between the tooth-side base portion and the opposite base portion extend in a parallel manner with respect to these base portion and opposite portion, i.e. lie on a circle between the tooth-side base portion and the opposite base portion. A rotation transmission mechanism including the same features (parallel connecting portions) is known from DE 13 00 408 B.

### SUMMARY OF THE INVENTION

The present invention provides a rotation transmission mechanism that can smoothly operate a plurality of gears even though backlash is eliminated and eliminate rattling, and a rotary connector including the rotation transmission mechanism.

According to a first aspect of the invention, there is provided a rotation transmission mechanism that includes the features of claim 1.

Preferred embodiments are defined by the dependent claims.

In addition, according to the rotary connector of the invention, since the respective gears are smoothly engaged without rattling in plan view even though a vehicle vibrates while running, it is possible to prevent rattling from being generated. Further, even though foreign substances enter the gaps between the planetary gear and the sun gear and the internal gear, the occurrence of a disturbance in the engagement and rotation of the respective gears can be avoided by the elastic deformation of the gears.

### BRIEF DESCRIPTION OF THE DRAWINGS

Fig. 1 is an exploded perspective view of a rotary connector according to an embodiment;
Fig. 2 is a plan view showing the disposition of each gear;
Fig. 3 is a perspective view of a planetary gear;
Fig. 4 is a partial enlarged view of a sun gear;
Fig. 5 is a schematic plan view showing the engagement between the planetary gear and the sun gear;
Fig. 6 is a cross-sectional view at a position, where the planetary gear is present, in the longitudinal cross-sectional view of the rotary connector;
Fig. 7 is a partial enlarged view of the sun gear that is provided with connecting portions including wide portions; and
Fig. 8 is a schematic plan view showing the engagement between the planetary gear and the sun gear.

### DESCRIPTION OF THE PREFERRED EMBODIMENTS

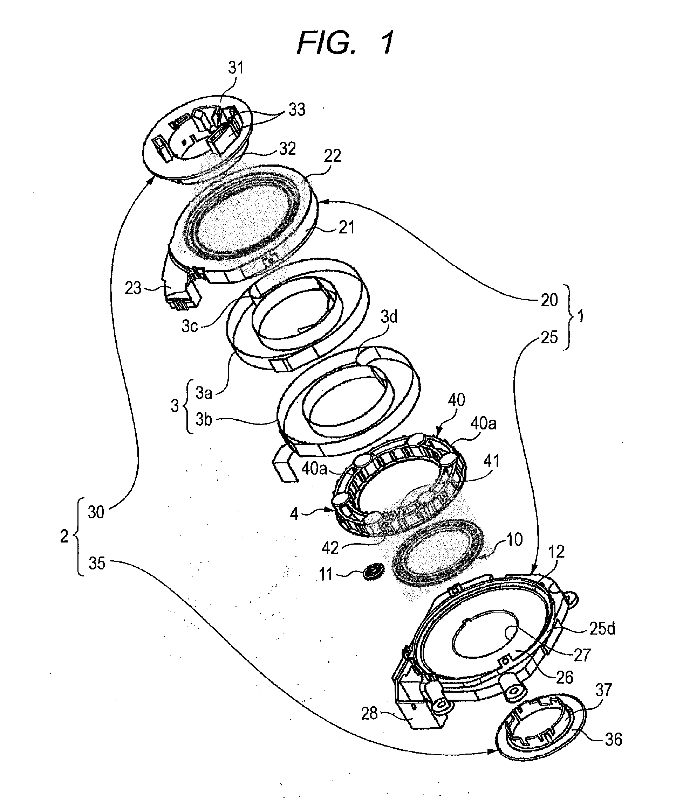

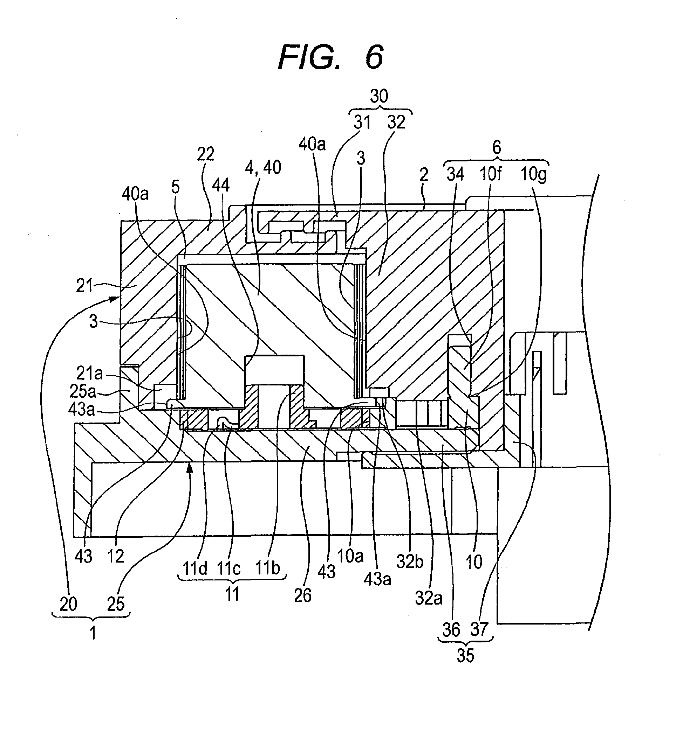

An embodiment of the invention will be described in detail with reference to the drawings. Fig. 1 is an exploded perspective view of a rotary connector according to this embodiment. Further, Fig. 6 is a cross-sectional view at a position, in the longitudinal cross-sectional view of the rotary connector, where a planetary gear is present. The rotary connector according to this embodiment includes a stationary housing 1 that is fixed to a steering column part of an automobile and a movable housing 2 that is rotated together with a steering wheel. Flat cables 3, which form an electrical connection between the stationary housing 1 and the movable housing 2, are wound and received in an annular space 5 (Fig. 6) that is formed between the stationary housing 1 and the movable housing 2.

An upper case 20 including an outer cylindrical body 21 and a lower case 25 including a bottom plate 26 are connected and integrated with each other by snap-fitting or the like, so that the stationary housing 1 is formed. A substantially ring-shaped ring portion 22, which protrudes inward from the upper end of the outer cylindrical body 21, is formed at the upper case 20. The ring portion 22 is integrally provided with an upper connection portion 23 that protrudes outward from the outer periphery of the outer cylindrical body 21.

The lower case 25 includes a wall portion 25a that is erected from the outer edge portion of the bottom plate 26, and an internal gear 12 is formed on the inner peripheral wall of the wall portion 25a. A planetary gear 11 is engaged with the internal gear 12, and the planetary gear 11 is engaged with a sun gear 10 that is provided on the movable housing 2. The structure of each gear will be described in detail below. The lower case 25 includes an opening 27 into which a steering shaft is inserted. The planetary gear 11 rotates and revolves on the inner surface of the bottom plate 26.

Further, a lower connection portion 28, which is integrated with the upper connection portion 23 when the lower case 25 is integrated with the upper case 20, is formed on the outer periphery of the lower case 25. The lower connection portion 28 is provided with a connector (not shown) electrically connecting the flat cables 3, which are led to the stationary side, to the vehicle side.

The movable housing 2 includes an upper rotor 30 and a lower rotor 35. The upper rotor 30 includes a ring-shaped top plate portion 31 that is positioned above the annular space 5, and an inner cylindrical body 32 that protrudes from the inner edge portion of the top plate portion 31 toward the bottom plate 26 of the lower case 25. The inner cylindrical body 32 is disposed coaxially with the outer cylindrical body 21, and faces the inner peripheral surface of the outer cylindrical body 21 with the annular space 5 interposed therebetween. Meanwhile, the lower rotor 35 includes a ring-shaped ring portion 36 and a cylindrical portion 37 that is erected from the inner edge portion of the ring portion 36.

The top plate portion 31 of the movable housing 2 includes movable-side connection portions 33 that receive lead blocks (not shown) connected to the inner end portions of the flat cables 3. External connectors (not shown) connected to, for example, an air bag system, a horn switch circuit, and the like provided on a steering portion are connected to the lead blocks. Further, the cylindrical portion 37 of the lower rotor 35, which is inserted from the opening 27 of the lower case 25, is connected to the inner cylindrical body 32 of the upper rotor 30, which is inserted into the stationary housing 1, by snap-fitting. When the upper and lower rotors 30 and 35 are connected to each other as described above, the ring portion 36 of the lower rotor 35 comes into contact with the outer surface of the bottom plate 26 of the lower case 25 and the movable housing 2 is rotatably supported by the stationary housing 1.

Conductor wires of each of the flat cables 3 are coated with a flexible resin film. In this embodiment, a first flat cable 3a and a second flat cable 3b are received and wound in the annular space 5. The winding direction of the first flat cable 3a is reversed at a first inverted portion 3c, and the winding direction of the second flat cable 3b is reversed at a second inverted portion 3d.

The inner end portion of each of the flat cables 3 is fixed to the movable housing 2 through the lead block (intermediate connection body) (not shown), and the outer end portion of each of the flat cables is fixed to the stationary housing 1 through a lead block. Further, when the movable housing 2 is rotated relative to the stationary housing 1, each of the flat cables 3 is wound on the outer peripheral surface of the inner cylindrical body 32 and is unwound from the outer peripheral surface.

A rotating ring body (inversion maintaining portion) 4 is disposed on the inner surface of the bottom plate 26 in the annular space 5 as shown in Fig. 6. The planetary gear 11 is rotatably supported by the rotating ring body 4. Accordingly, when the movable housing 2 is rotated, the rotating ring body 4 is rotated with the rotation and revolution of the planetary gear 11.

Meanwhile, as shown in Fig. 1, the rotating ring body 4 includes a ring-shaped main body portion 40. Further, the rotating ring body 4 includes a first opening (inversion maintaining portion) 41 into which the first inverted portion 3c of the first flat cable 3a is inserted and a second opening (inversion maintaining portion) 42 into which the second inverted portion 3d of the second flat cable 3b is inserted, at different positions on the main body portion 40 in a circumferential direction. For this reason, the inverted shapes of the first and second inverted portions 3c and 3d of the respective flat cables 3 are maintained by the first and second openings 41 and 42, regardless of the rotational position of the movable housing 2. Here, the main body portion 40 includes peripheral wall portions 40a that face the inner wall of the outer cylindrical body 21 and the outer wall of the inner cylindrical body 32. Meanwhile, for example, columnar bodies, cylindrical bodies, rotatable rollers, or the like, which are formed so as to protrude from the planetary gear 1, other than the first and second openings of the rotating ring body 4 may be applied as the inversion maintaining portions, and are disposed within the inverted portions (first and second inverted portions 3c and 3d) of the flat cable 3.

With this structure, it is possible to stably maintain the shapes of the first and second inverted portions 3c and 3d of the flat cable 3 regardless of the rotation direction or the rotational speed of the movable housing 2. Accordingly, it is possible to improve the quality and reliability of the rotary connector by making a disturbance in the deformation of the flat cable 3 be difficult to generate. Further, since the plurality of openings are formed, a plurality of inverted flat cables 3 can be easily wound by a small number of members. As a result, it is possible to reduce costs.

As shown in Fig. 6, the sun gear 10 is mounted on a first opposite surface 32a, which faces the bottom plate 26 of the lower case 25, of the inner cylindrical body 32 of the movable housing 2. Meanwhile, the first opposite surface 32a will be described in detail below. When the movable housing 2 is supported so as to be rotatable relative to the stationary housing 1, the sun gear 10 faces the internal gear 12 of the stationary housing 1 in the radial direction.

As shown in Fig. 6, the flat cables 3 are wound in the annular space 5 on the inner periphery and the outer periphery of the rotating ring body 4, respectively. The first and second opposite surfaces 32a and 32b (contact surface portions), which face the bottom plate 26 (lower case 25), are formed on the radially outer portion of the lower portion of the inner cylindrical body 32 with a level difference therebetween. The first opposite surface 32a is formed on the radially inner portion of the inner cylindrical body 32, and the second opposite surface 32b is formed on the radially outer portion of the inner cylindrical body 32. The sun gear 10 is mounted on the first opposite surface 32a as described above.

The rotating ring body 4 includes flange portions 43 that are formed at the lower end portion thereof so as to protrude outward and inward. Further, an inner edge portion 43a of the flange portion which protrudes inward, is positioned inside the outer peripheral wall of the inner cylindrical body 32 in the radial direction. Meanwhile, an outer edge portion 43b of the flange portion 43, which protrudes outward, extends into an outer gap portion 21a, which is formed by a step portion formed at the lower portion of the outer cylindrical body 21, and is positioned outside the inner peripheral wall of the outer cylindrical body 21 in the radial direction. Accordingly, the flange portions 43 support the lower end portions of the respective flat cables 3. Further, a space in which each of the flat cables can be moved in the vertical and radial direction is narrowly defined by the lower surfaces of the ring portion 22 and the top plate portion 31, the upper surface of the flange portion 43, and the above-mentioned peripheral wall portions 40a. Accordingly, even though a vehicle vibrates up and down while running, it is possible to reduce sound that is generated by the collision between the respective flat cables and the inner surfaces of the ring portion 22 and the bottom plate 26. Furthermore, since the inner edge portion 43a of the flange portion 43 always comes into elastic contact with the first opposite surface 32a due to elastic bias forces of elastic arm portions 11c, the planetary gear 11 and the rotating ring body 4 do not rattle in a vertical direction even though a vehicle vibrates while running. Accordingly, it is possible to prevent rattling from being generated.

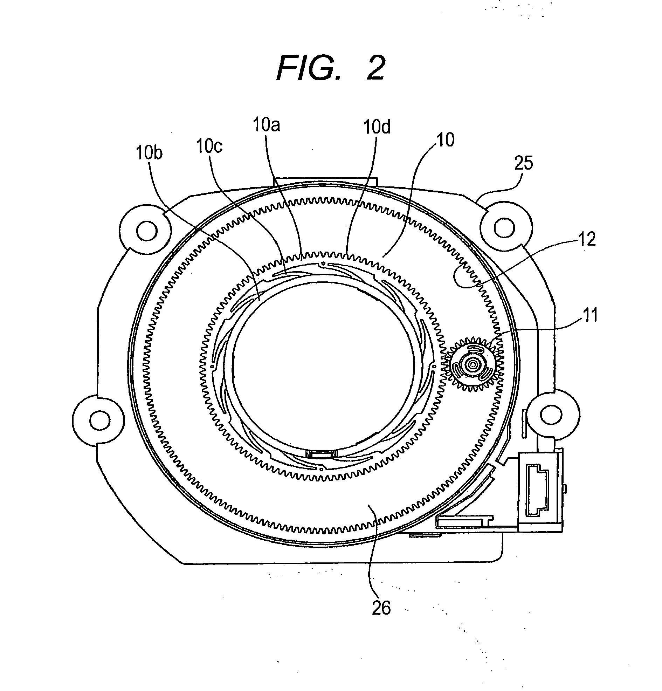

Fig. 2 is a plan view showing the disposition of each gear. The planetary gear 11 is engaged with the sun gear 10 and the internal gear 12 that are disposed coaxially. Accordingly, the planetary gear 11 revolves in the circumferential direction while rotating with the rotation of the movable housing 2. The rotating ring body 4 is rotated on the inner surface of the bottom plate 26 by the rotation and the revolution of the planetary gear 11.

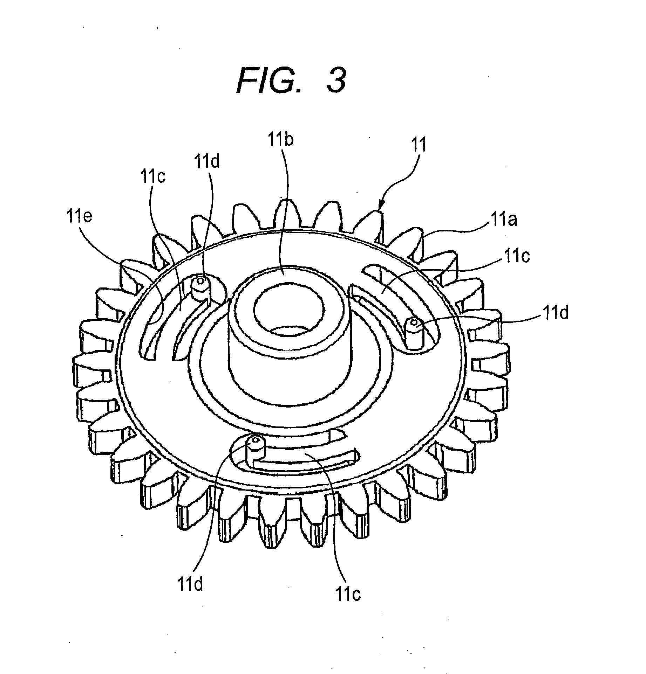

The planetary gear 11 will be described in detail. Fig. 3 is a perspective view of the planetary gear 11. The planetary gear 11 includes a tooth row 11a that is formed of a plurality of teeth arranged in the circumferential direction of the outer peripheral surface. Further, a protruding portion 11b is formed at the central portion of the planetary gear 11 so as to protrude in the axial direction. The protruding portion 11b is rotatably fitted to a fitting recess 44 of the rotating ring body 4 (Fig. 6). Accordingly, when the planetary gear 11 rotates and revolves, the rotating ring body 4 is rotated in the annular space 5.

Moreover, slits 11e are formed in the planetary gear 11 in the circumferential direction so as to include a plurality of elastic arm portions 11c. Protrusions 11d are formed on the end portions of the elastic arm portions 11c (elastic contact portions) so as to protrude toward the rotating ring body 4. Since the elastic arm portion 11c is formed in the shape of a cantilever so as to be thinner than other portions of the planetary gear 11, the elastic arm portion 11c can be elastically deformed. Since the planetary gear 11 is disposed in Fig. 6 so that the elastic arm portions 11c (not shown) are deformed so as to be bent, the protrusions 11d receive a resistive force (reaction force) from the rotating ring body 4. Accordingly, the planetary gear 11 generates an elastic bias force that is directed downward in the axial direction.

The planetary gear 11 pushes up the rotating ring body 4 and presses the rotating ring body 4 against the first opposite surface 32a (inner cylindrical body 32) by the elastic bias forces that are generated by the elastic arm portions 11c. Accordingly, since the rotating ring body 4 does not rattle in the annular space 5 even though a vehicle vibrates while running, it is possible to prevent rattling from being generated.

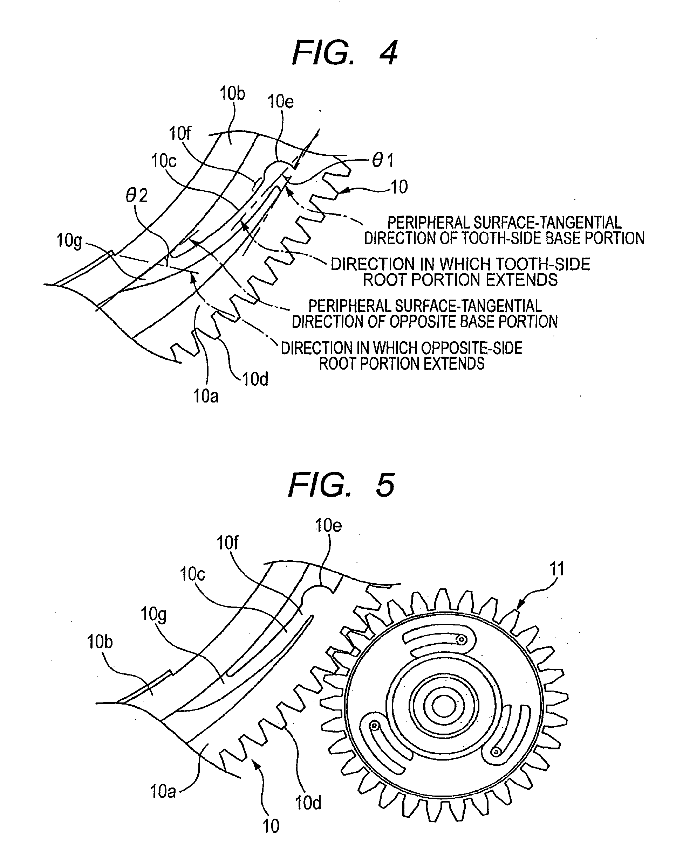

The sun gear 10 will be described in detail. Fig. 4 is a partial enlarged view of the sun gear 10. The sun gear 10 includes a tooth-side base portion 10a and an opposite base portion 10b that are integrated by a plurality of connecting portions 10c formed in the circumferential direction. The tooth-side base portion 10a forms the outer periphery, is formed in the shape of a ring, and includes a tooth row 10d on one peripheral surface thereof. The opposite base portion 10b forms the inside, that is, the center-side of the tooth-side base portion 10a, and faces the peripheral surface of the tooth-side base portion 10a opposite to the peripheral surface of the tooth-side,base portion 10a on which the tooth row 10d is formed.

Protruding portions 10e, which protrude toward the opposite base portion 10b, are formed on the peripheral surface of the tooth-side base portion 10a facing the opposite base portion 10b. Further, the connecting portions 10c extend toward the opposite base portion 10b from the positions, which are separated from the tooth-side base portion 10a, on the protruding portions 10e. A portion of the connecting portion 10c between a tooth-side root portion 10f, which is a root portion connected to the tooth-side base portion 10a, and an opposite-side root portion 10g, which is a portion connected to the opposite base portion 10b, is formed in the shape of a gentle curve. Meanwhile, since the connecting portion 10c is formed so as to be thinner and narrower than other portions of the sun gear 10, the connecting portion 10c can be elastically deformed.

Fig. 4 shows a peripheral surface-tangential direction of the tooth-side base portion 10a at the position where the protruding portion 10e is formed, and a direction in which a portion of the connecting portion 10c near the tooth-side root portion 10f extends. An angle θ1 between these directions is a small acute angle, and the tooth-side root portion 10f and the tooth-side base portion 10a are substantially parallel to each other. In detail, the tooth-side root portion 10f extends from the protruding portion 10e so as to be parallel to the peripheral surface-tangential direction while being separated from the peripheral surface of the tooth-side base portion 10a. Further, the connecting portion 10c extends from the tooth-side root portion 10f toward the peripheral surface of the opposite base portion 10b facing the tooth-side base portion 10a so that θ1 is gradually increased. Furthermore, since the connecting portion 10c extends the protruding portion 10e that protrudes from the tooth-side base portion 10a, a space, which is elastically deformed so as to be close to the tooth-side base portion 10a, is also secured. For this reason, a portion, which is connected to the tooth-side base portion 10a, of the connecting portion 10c is apt to be elastically deformed in the radial direction of the sun gear 10. Meanwhile, elastic deformation is not apt to occur in the circumferential direction of the sun gear 10.

The connecting portion 10c is curved so that an angle formed by the connecting portion 10c gradually becomes larger than an angle formed by the peripheral surface-tangential direction of the tooth-side base portion 10a from the tooth-side root portion 10f toward the opposite-side root portion 10g. Accordingly, an angle θ2 between a direction in which the opposite-side root portion 10g extends and the peripheral surface-tangential direction of the opposite base portion 10b is larger than the angle θ1. Further, since the connecting portion 10c is formed so as to become wide toward the opposite-side root portion 10g, the strength of a portion of the connecting portion 10c close to the opposite-side root portion 10g is high. For this reason, a portion, which is connected to the opposite base portion 10b, of the connecting portion 10c is not apt to be elastically deformed both in the radial direction and the circumferential direction of the sun gear 10.

Fig. 5 is a schematic plan view showing the engagement between the planetary gear 11 and the sun gear 10. Fig. 5 emphatically shows that a gap between the sun gear 10 and the internal gear 12 is narrowed due to a temperature change, more than in reality. When a gap between the sun gear 10 and the internal gear 12 is narrowed, the planetary gear 11 is barely deformed but presses the sun gear 10, which can be easily deformed, in the radial direction. Accordingly, the sun gear 10 is deformed in the radial direction. That is, the portion, which is close to the tooth-side root portion 10f, of the connecting portion 10c of the sun gear 10 is elastically deformed. Meanwhile, the strength of the portion of the connecting portion 10c close to the opposite-side root portion 10g is high and is not easily elastically deformed, and the portion of the connecting portion 10c close to the tooth-side root portion 10f is also not easily elastically deformed in the circumferential direction. Accordingly, since the sun gear 10 is deformed only in the radial direction, it is possible to prevent the shortening of the life span of the sun gear 10 that is caused by the torsional deformation generated when deformation is generated in the circumferential direction.

If the protruding portion 10e is formed on the tooth-side base portion 10a of the sun gear 10 and an angle (an angle θ1 of Fig. 4) between the connecting portion 10c extending from the protruding portion 10e and the peripheral surface-tangential direction of the tooth-side base portion 10a at the protruding portion 10e is set to be an acute angle as described above, the connecting portion 10c is formed so as to be capable of being elastically deformed only in the radial direction. Accordingly, even though backlash between the planetary gear 11 and the sun gear 10 and the internal gear 12 is set to zero, the respective gears can be smoothly engaged and rotated. Therefore, since the respective gears are smoothly engaged without rattling in plan view even though a vehicle vibrates while running, it is possible to prevent rattling from being generated. Further, even though foreign substances enter the gaps between the planetary gear 11 and the sun gear 10 and the internal gear 12, the occurrence of a disturbance in the engagement and rotation of the respective gears can be avoided by the elastic deformation of the planetary gear 11 and the sun gear 10.

Furthermore, since the rotating ring body 4 provided on the planetary gear 11 is biased upward in the axial direction by the elastic arm portions 11c, the inner edge portion 43a of the flange portion 43 always comes into elastic contact with the second opposite surface 32b. Accordingly, since the planetary gear 11 and the rotating ring body 4 do not rattle in the vertical direction even though a vehicle vibrates up and down while running, it is possible to prevent rattling from being generated.

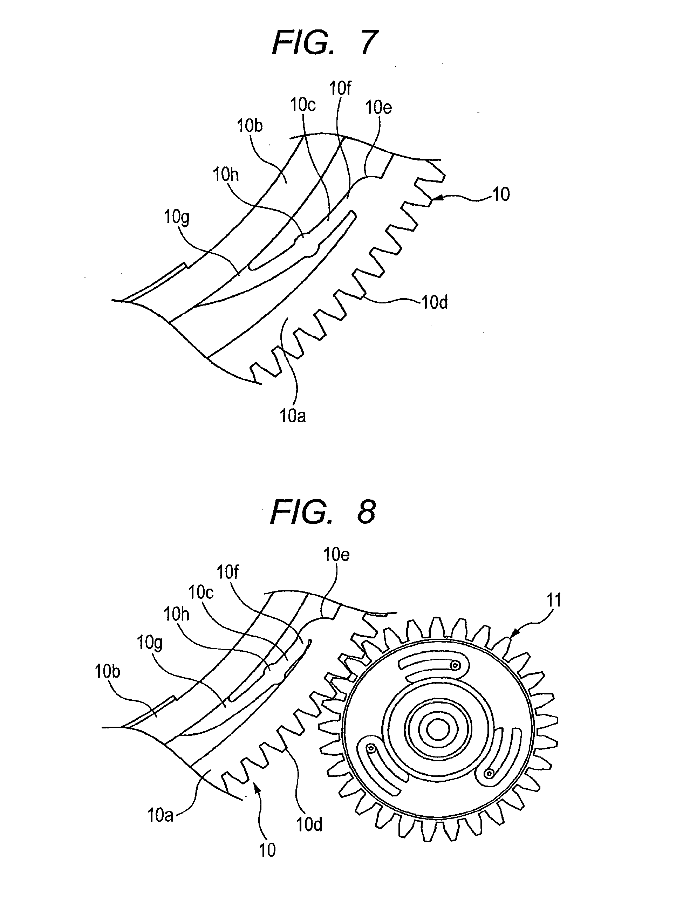

The connecting portion 10c may be provided with a wide portion 10h. Fig. 7 is a partial enlarged view of the sun gear 10 that is provided with the connecting portions 10c including the wide portions 10h. The wide portion 10h is a portion that is formed between the opposite-side root portion 10g and the tooth-side root portion 10f of the connecting portion 10c so as to be wider than other portions. The wide portion 10h is a portion that is to be pushed by an ejector pin when the sun gear 10 is manufactured by molding a resin, and also has a function of restricting the deformation of the connecting portion 10c.

Fig. 8 is a schematic plan view showing the engagement between the planetary gear 11 and the sun gear 10. Since the wide portion 10h comes into contact with the tooth-side base portion 10a when the sun gear 10 is pressed against the planetary gear 11 and deformed in the radial direction, the further deformation of the connecting portion 10c is restricted. Accordingly, it is possible to prevent the shortening of the life span of the sun gear that is caused by the excessive deformation of the connecting portion 10c.

In the rotary connector according to this embodiment, the sun gear 10 has been adapted so as to be capable of being elastically deformed in the radial direction by the connecting portions 10c. However, one or more of the sun gear 10, the planetary gear 11, and the internal gear 12 may be adapted so as to be capable of being elastically deformed in the radial direction by the same structure.

Further, in this embodiment, the protruding portions 10e have been formed on the tooth-side base portion 10a of the sun gear 10 and the portion of the connecting portion 10c close to the protruding portion 10e has been adapted so as to be easily deformed in the radial direction. However, the protruding portions may be formed on the opposite base portion 10b of the un gear 10. That is, even though the protruding portions are formed on the opposite base portion and the direction of curvature of the connecting portion is opposite to the above-mentioned direction, it is possible to obtain the same function.

The embodiment of the invention has been described above, but the invention is not limited to this embodiment and may be applied in various ways within the scope of the invention. A rotation transmission mechanism, which includes the sun gear 10, the planetary gear 11, and the internal gear 12 and is used in the rotary connector, has been described in this embodiment. However, as long as a rotation transmission mechanism includes a plurality of gears to be engaged with each other and can transmit power by the rotation of the gears, the invention can be applied to the rotation transmission mechanism. Accordingly, it is possible to obtain an effect of smoothly engaging the respective gears and rotating the gears even though backlash between the gears is set to zero.

## Claims

1. A rotation transmission mechanism that includes a plurality of gears to be engaged with each other and transmits power by the rotation of the gears,
wherein at least one of the plurality of gears includes a tooth-side base portion (10a) and an opposite base portion (10b) that are disposed coaxially and connected to each other by connecting portions (10c), the tooth-side base portion (10a) is formed in the shape of a ring and includes a tooth row (10d) on one peripheral surface thereof, and the opposite base portion (10b) faces a peripheral surface of the tooth-side base portion (10a) opposite to the peripheral surface of the tooth-side base portion (10a) on which the tooth row (10d) is formed,
protruding portions (10e) are formed on any one of the peripheral surface of the tooth-side base portion (10a) facing the opposite base portion (10b) and the peripheral surface of the opposite base portion (10b) facing the tooth-side base portion (10a), and
the connecting portions (10c) extend from the protruding portions (10e) toward the other one of the peripheral surface of the tooth-side base portion (10a) facing the opposite base portion (10b) and the peripheral surface of the opposite base portion (10b) facing the tooth-side base portion (10a),
**characterized in that** a direction in which a portion near a root portion (10f) of each connecting portion (10c) on the side of the any one of the tooth-side base portion (10a) and the opposite base portion (10b) extends, and a peripheral surface-tangential direction of the any on of the tooth-side base portion (10a) and the opposite base portion (10b) form an acute angle (θ1).

2. The rotation transmission mechanism according to claim 1,
wherein a connection angle (θ2) between a direction in which a root portion (10g) of the connecting portion (10c) on the side of the other one of the toot side base portion (10a) and the opposite base portion (10b) extends, and a peripheral surface-tangential direction of the other one of the tooth side base portion (10a) and the opposite base portion (10b) is larger than said acute angle (θ1).

3. The rotation transmission mechanism according to claim 1 or 2,
wherein the connecting portion (10c) is formed so as to be widened toward a portion thereof that is connected to the other one of the tooth side base portion (10a) and the opposite base portion (10b).

4. The rotation transmission mechanism according to any of claims 1 to 3,
wherein a root portion, which is connected to the any one of the tooth-side base portion (10a) and the opposite base portion (10b), of the connecting portion (10c) is parallel to the peripheral surface-tangential direction of the any one of the tooth-side base portion (10a) and the opposite base portion (10b) while being separated from the peripheral surface of the any one of the tooth-side base portion (10a) and the opposite base portion (10b).

5. The rotation transmission mechanism according to any of claims 1 to 4,
wherein the connecting portion (10c) includes a wide portion (10h) between the portion thereof connected to the tooth-side base portion (10a) and a portion thereof connected to the opposite base portion (10b).

6. A rotary connector comprising:
a stationary housing (1) that includes an outer cylindrical body (21) and a bottom plate (26); and
a movable housing (2) that is disposed coaxially with the stationary housing (1) and includes an inner cylindrical body (32) facing the outer cylindrical body,
wherein an annular space (5) is formed between the outer cylindrical body (21) and the inner cylindrical body (32) that face each other, and flat cables (3) are wound and received in the annular space (5),
an internal gear (12) is provided on the inner surface of the stationary housing (1),
the inner cylindrical body (32) of the movable housing (2) is provided with a sun gear (10) that is disposed coaxially with the internal gear (12) and faces the internal gear (12),
a planetary gear (11), which engaged with the sun gear (10) and the internal gear (12) and rotates and revolves, is rotatably provided on the bottom plate (26), and
the planetary gear (11), the internal gear (12), and the sun gear (10) form the rotation transmission mechanism according to any one of claims 1 to 5.

## Patentansprüche

1. Drehübertragungsmechanismus, der mehrere miteinander in Eingriff zu bringende Zahnräder enthält und durch Drehung der Zahnräder Kraft überträgt, wobei mindestens eines der mehreren Zahnräder einen zahnseitigen Basisteil (10a) und einen entgegengesetzten Basisteil (10b) enthält, die koaxial angeordnet und miteinander über Verbindungsabschnitte (10c) verbunden sind, wobei der zahnseitige Basisteil (10a) in Form eines Rings ausgebildet ist und eine Zahnreihe (10d) an seiner einen Umfangsfläche enthält, und der entgegengesetzte Basisteil (10b) einer Umfangsfläche des zahnseitigen Basisteils (10a) abgewandt von der Umfangsfläche des zahnseitigen Basisteils (10a), an welchem die Zahnreihe (10d) gebildet ist, gegenüberliegt,
an einer von der Umfangsfläche des zahnseitigen Basisteils (10a) gegenüber dem entgegengesetzten Basisteil (10b) und der Umfangsfläche des entgegengesetzten Basisteils (10b) gegenüber dem zahnseitigen Basisteil (10a) vorstehende Abschnitte (10e) ausgebildet sind, und
die Verbindungsabschnitte (10c) sich von den vorstehenden Abschnitten (10e) aus in Richtung der anderen von der Umfangsfläche des zahnseitigen Basisteils (10a) gegenüber dem entgegengesetzten Basisabschnitt (10b) und der Umfangsfläche des entgegengesetzten Basisteils (10b) gegenüber dem zahnseitigen Basisteil (10a) erstreckt,
**dadurch gekennzeichnet, dass** eine Richtung, in welcher ein Abschnitt in der Nähe eines Fußabschnitts (10f) jedes Verbindungsabschnitts (10c) auf der Seite von einem von dem zahnseitigen Basisteil (10a) und dem entgegengesetzten Basisteil (10b) sich erstreckt, und eine Umfangsflächen-Tangentialrichtung eines von dem zahnseitigen Basisteil (10a) und dem entgegengesetzten Basisteil (10b) einen spitzen Winkel (Θ1) bilden.

2. Drehübertragungsmechanismus nach Anspruch 1, bei dem ein Verbindungswinkel (Θ2) zwischen einer Richtung, in der ein Fußabschnitt (10g) des Verbindungsabschnitts (10c) auf der Seite des anderen Teils von dem zahnseitigen Basisteil (10a) und dem entgegengesetzten Basisteil (10c) sich erstreckt, und eine Umfangsflächen-Tangentialrichtung des anderen Teils von dem zahnseitigen Basisteil (10a) und dem entgegengesetzten Basisteil (10b) größer als der spitze Winkel (Θ1) ist.

3. Drehübertragungsmechanismus nach Anspruch 1 oder 2, bei dem der Verbindungsabschnitt (10c) derart ausgebildet ist, dass er sich in Richtung eines Bereichs aufweitet, der mit dem anderen Teil von dem zahnseitigen Basisteil (10a) und dem entgegengesetzten Basisteil (10b) verbunden ist.

4. Drehübertragungsmechanismus nach einem der Ansprüche 1 bis 3, bei dem ein Fußabschnitt, der mit einem von dem zahnseitigen Basisabschnitt (10a) und dem entgegengesetzten Basisteil (10b) verbunden ist, des Verbindungsabschnitts (10c) parallel verläuft zu der Umfangsflächen-Tangentialrichtung des einen Teils von dem zahnseitigen Basisteil (10a) und dem entgegengesetzten Basisteil (10b), während er getrennt ist von der Umfangsfläche des einen Teils von dem zahnseitigen Basisteil (10a) und dem entgegengesetzten Basisteil (10b).

5. Drehübertragungsmechanismus nach einem der Ansprüche 1 bis 4, bei der Verbindungsabschnitt (10c) einen breiten Abschnitt (10h) zwischen seinem Bereich, der mit dem zahnseitigen Basisteil (10a) verbunden ist, und seinem Bereich aufweist, der mit dem entgegengesetzten Basisteil (10b) verbunden ist.

6. Drehverbinder, umfassend:
ein ortsfestes Gehäuse (1), das einen äußeren zylindrischen Körper (21) und eine Bodenplatte (26) enthält; und
ein bewegliches Gehäuse (2), das koaxial bezüglich des ortsfesten Gehäuses (1) angeordnet ist und einen inneren zylindrischen Körper (32) gegenüber dem äußeren zylindrischen Körper enthält,
wobei ein Ringraum (5) zwischen dem äußeren zylindrischen Körper (21) und dem inneren zylindrischen Körper (32), die einander gegenüberliegen, gebildet ist, und innerhalb des Ringraums (5) Flachkabel (3) gewickelt und aufgenommen sind,
ein Innenzahnrad (12) an der Innenfläche des ortsfesten Gehäuses (1) ausgebildet ist,
der innere zylindrische Körper (32) des beweglichen Gehäuses (2) mit einem Sonnenrad (10) ausgestattet ist, das koaxial bezüglich des Innenzahnrads (12) angeordnet ist und dem Innenzahnrad (12) gegenüberliegt,
ein Planetenrad (11), das mit dem Sonnenrad (10) und dem Innenzahnrad (12) in Eingriff steht und sich dreht und umläuft, drehbar an der Bodenplatte (26) vorgesehen ist, und
das Planetenrad (11), das Innenzahnrad (12) und das Sonnenrad (10) den Drehübertragungsmechanismus nach einem der Ansprüche 1 bis 5 bilden.

## Revendications

1. Mécanisme de transmission de rotation, qui comporte une pluralité de pignons destinés à engrener les uns avec les autres et transmet de la puissance par la rotation des pignons
dans lequel au moins un pignon parmi la pluralité de pignons comprend une partie basale côté dents (10a) et une partie basale opposée (10b) qui sont disposées coaxialement et reliées l'une à l'autre par des parties de liaison (10c), la partie basale côté dents (10a) se présente sous la forme d'une couronne et comprend une rangée de dents (10d) sur une première surface périphérique de celle-ci, et la partie basale opposée (10b) est en regard d'une surface périphérique de la partie basale côté dents (10a) opposée à la surface périphérique de la partie basale côté dents (10a) sur laquelle est formée la rangée de dents (10d)
des parties saillantes (10e) sont formées sur l'une quelconque des surface périphérique de la partie basale côté dents (10a) en regard de la partie basale opposée (10b) et surface périphérique de la partie basale opposée (10b) en regard de la partie basale côté dents (10a), et
les parties de liaison. (10c) s'étendent depuis les parties saillantes (10e) vers l'autre des surface périphérique de la partie basale côté dents (10a) en regard de la partie basale opposée (10b) et surface périphérique de la partie basale opposée (10b) en regard de la partie basale côté dents (10a),
**caractérisé en ce qu'**une direction dans laquelle s'étend une partie proche d'une partie pied (10f de chaque partie de liaison (10c) du côté de l'une quelconque des partie basale côté dents (10a) et partie basale opposée (10b), et une direction tangentielle à la surface périphérique de l'une quelconque des partie basale côté dents (10a) et partie basale opposée (10b) forment un angle aigu (Θ1).

2. Mécanisme de transmission de rotation selon la revendication 1,
dans lequel un angle de connexion (Θ2) entre une direction dans laquelle s'étend une partie pied (10g) de la partie de liaison (10c) du côté de l'autre des partie basale côté dents (10a) et partie basale opposée (10b), et une direction tangentielle à la surface périphérique de l'autre des partie basale côté dents (10a) et partie basale opposée (10b) est plus grand que ledit angle aigu (Θ1).

3. Mécanisme de transmission de rotation selon la revendication 1 ou 2,
dans lequel la partie de liaison (10c) est formée de manière à être élargie vers une partie de celle-ci qui est reliée à l'autre des partie basale côté dents (10a) et partie basale opposée (10b).

4. Mécanisme de transmission de rotation selon l'une quelconque des revendications 1 à 3,
dans lequel une partie pied, qui est reliée à la quelconque des partie basale côté dents (10a) et partie basale opposée (10b), de la partie de liaison (10c) est parallèle à la direction tangentielle à la surface périphérique de la quelconque des partie basale côté dents (10a) et partie basale opposée (10b) tout en étant séparée de la surface périphérique de la quelconque des partie basale côté dents (10a) et partie basale opposée (10b).

5. Mécanisme de transmission de rotation selon l'une quelconque des revendications 1 à 4,
dans lequel la partie de liaison (10c) comprend une partie large (10h) entre la partie de celle-ci reliée à la partie basale côté dents (10a) et une partie de celle-ci reliée à la partie basale opposée (10b).

6. Mécanisme de connexion rotatif, comportant :
un boîtier fixe (1) qui comprend un corps extérieur cylindrique (21) et une plaque de fond (26) ; et
un boîtier mobile (2) qui est disposé coaxialement au boîtier fixe (1) et comprend un corps intérieur cylindrique (32) en regard du corps extérieur cylindrique,
dans lequel un espace annulaire (5) est formé entre le corps extérieur cylindrique (21) et le corps intérieur cylindrique (32) en regard l'un de l'autre, et des câbles plats (3) sont enroulés et logés dans l'espace annulaire (5),
un pignon interne (12) est monté sur la surface intérieure du boîtier fixe (1),
le corps intérieur cylindrique (32) du boîtier mobile (2) est muni d'un pignon solaire (10) qui est disposé coaxialement au pignon interne (12) et en regard du pignon interne (12),
un pignon planétaire (11), qui engrène avec le pignon solaire (10) et le pignon interne (12) et tourne et pivote, est monté de manière à pouvoir tourner sur la plaque de fond (26), et
le pignon planétaire (11), le pignon interne (12) et le pignon solaire (10) forment le mécanisme de transmission de rotation selon l'une quelconque des revendications 1 à 5.
